Europäisches Patentamt

European Patent Office

Office européen des brevets

(19)

(11) Publication number: **0 084 649**
**A1**

(12) **EUROPEAN PATENT APPLICATION**

(21) Application number: **82111662.1**

(22) Date of filing: **15.12.82**

(51) Int. Cl.³: **B 23 K 33/00**

(30) Priority: **27.01.82 IT 1932782**

(43) Date of publication of application: **03.08.83**
**Bulletin 83/31**

(84) Designated Contracting States: **AT BE CH DE FR GB LI NL SE**

(71) Applicant: **EMU S.p.A., 31, Via B. Buozzi, I-06055 Marsciano Perugia (IT)**

(72) Inventor: **Biscarini, Aldo, 31, Via B. Buozzi, Marsciano (Perugia) (IT)**

(74) Representative: **Marietti, Giuseppe, CENTRO DI CONSULENZA IN PROPRIETA' INDUSTRIALE viale Caldara, 43, I-20122 Milano (IT)**

(54) **A method for reciprocally welding tubular metal bodies and product thus obtained.**

(57) The invention concerns a method to perform reciprocal welding of two tubular metal bodies positioned in such a manner that their axes, in the welding area, form an angle different from 0° between each other, said tubular metal bodies being particularly used to manufacture metal furniture, such as garden furniture or the like.

To avoid the inconveniences of usual seam welding, one (10) of the two tubular bodies is submitted to a flattening operation by locally pinching its wall, so creating a double-thick area (12), and then the two bodies (10, 14) are welded by projection with at least partial penetration of the double-wall area (12) into the original shape of the other tubular body (14).

0084649

This invention concerns a method to perform reciprocal welding of two tubular metal bodies, the axes of which, in the welding area, form an angle different from 0° between each other. The invention also relates to a group of two or more tubular metal bodies welded according to the above mentioned method and specially designed to constitute, with other components, when needed, a metal piece of furniture, for instance a garden furniture.

The welding of two tubular metal bodies angled to each other is usually performed by using the technique of seam welding, placing the two tubular bodies in the position that they will have at the end of welding and carrying out welding by the use of external material and subsequent heating of the concerned area. This technique involves difficulties and inconveniences which create obstacles to the production, for instance of metal furniture and specially of garden furniture. The production inconveniences are due to the fact that seam welding requires the presence of skilled operators and necessarily involves a considerable loss of time which reduces the production rate of the forniture manifacturing chain. On the other hand, there are also inconveniences and disadvantages related to the finished product, in that the long times required for seam welding involve considerable heating of the tubular bodies near the welding area and therefore an alteration of the physical conditions of same, said alteration leading to a change in the conditions of static resistance of the tubular bodies near the welding area, and therefore in general of the whole finished product. Moreover, the presence of weld
material makes it difficult to perform perfect finishing by plastification in correspondence with the
welding area, an additional operation of cleaning
and polishing of said area being furthermore required.

An object of the present invention is
to propose a new method for welding tubular
bodies under the cited conditions, which allows to
eliminate the draw backs of the known technique
and, therefore, allows to perform welding under optimal
conditions, from the view point both of the
production and of the finished product,                .
and namely in very short times, with possible
automation of the operations. The obtained product
has a better static resistance not affected by
thermal changes near the welding area ,
and can be finished, specially by plastification,
in a better way.

According to the present invention, these objects
are achieved by a welding method as hereinabove defined,
characterized by forming a double-thick area
in the wall of one of the two tubular bodies and by
projection welding the two bodies in correspondence
with said double-thick area of the first tubular body.
In particular, the double-thick area is obtained
by flattening or locally "pinching" the first
tubular body . During the welding operation, said
area at least partially penetrates into the original
shape of the other tubular body. In this way it is
possible to obtain the advantages of a tube having

- 3 - 0084649

higher thickness and in general a more resistant welding area, in that a reciprocal partial penetration occurs between the two welded bodies. The stress due to overheating is avoided or at least reduced, as the welding time is shortened, and the welding operation is performed by an extremely quick and possibly automated technique, without the need of weld material, with a surface finishing particularly suitable to be covered by plastification in correspondence with the welded area.

As above said, the invention also relates to a group of two or more metal bodies, welded by projection to each other, according to said method, as well as to a metal piece of furniture formed by two or more structural components shaped as tubular bodies, welded to each other as already said.

The different stages of the method according to the invention will be now schematically illustrated with reference to the attached drawing where:
Figures 1 and 2 schematically show, in perspective view and in section, the first operation to form a double-thick flattened area on the wall of one of the two tubular bodies to be welded to each other, for instance on the arm of a chair made of metal.
Figure 3 perspectively shows two tubular bodies, respectively forming the post or arm of a chair and the horizontal structural element supporting the plane part of same, in position of reciprocal presentation before welding.
Figure 4 is a partial section according to a horizontal plane of the components of figure 3.
Figures 5 and 6 are views corresponding to those of figures 3 and 4 of the two tubular components in a welded condition.

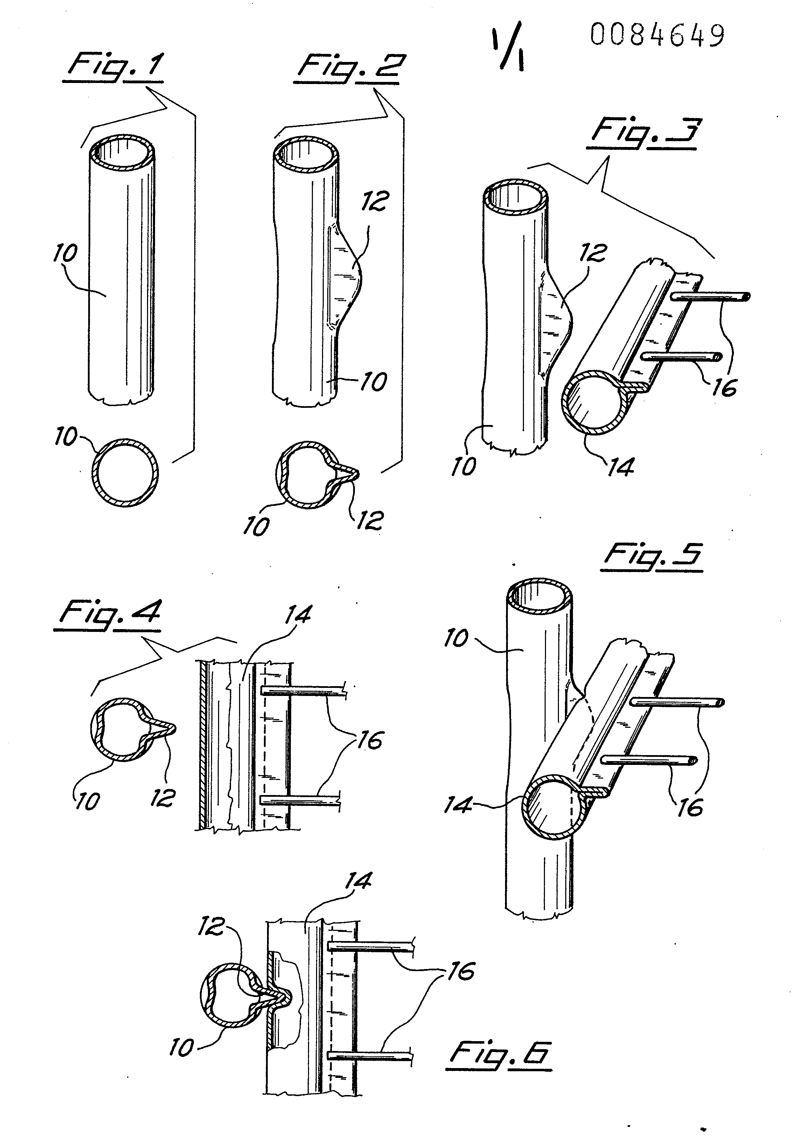

First of all, referring to figure 1 and figure 2, a first tubular metal body 10, constituting for example the arm or post of a chair or metal arm-chair, is locally deformed as indicated by 12 by an operation of flattening or "pinching" capable of creating a double-thick wall area, protruding from the original shape of the tubular body.

As indicated in figures 3 and 4, the first tubular body 10, with its double-thick area 12, is placed in front of the second tubular body 14, which must be welded to the first one to get the axes of the two tubular bodies to form an angle different from 0°. In this case, the two tubular bodies are almost perpendicular to each other and in such condition they are reciprocally approached so that the double-thick area 12 is positioned in correspondence to and centred on the side of the wall of the second tubular body 14. The latter can eventually have other elements of the finished product, for example a mesh structure 16 forming the supporting plane of the chair or arm-chair.

At this point, welding is performed according to a technique, known in itself, of projection welding, consisting in making high amperage current pass in the two bodies to be welded and in pushing the two bodies to each other, so that the contact area has a temperature sufficient to locally melt the material, owing to the increased resistance to the current.

Welding according to this technique gives the result illustrated in figures 5 and 6 where in particular it is possible to see that the double thick area 12 of the first tubular body has entered almost partially into the original shape of the tubular body 14, so contributing to increase the static resistance of the welded tubular bodies.

Finally, it should be added that this welding technique allows to obtain better finishing by plastification and the higher mechanical resistance of the welded area assures that, under stress, the pieces welded to each other do not undergo reciprocal movements such as to break the plastic layer and therefore cause the beginning of rusting in the materials.

What has been stated above, makes it obvious that said method according to the invention can be applied to welding any tubular metal body and for whatever application. Therefore, the invention also covers the assembly of two or more tubular metal bodies so welded. However, the invention finds its particularly preferred application in the field of metal furniture, for instance garden metal furniture, obtained with a frame having tubular structure and usually finished by plastification.

C L A I M S

1 - A method for reciprocally welding two metal tubular bodies the axes of which in the welding area form an angle different from 0°, characterized by the formation of a double-thick area (12) in the wall of the first (10)of the two tubular bodies and by projection welding the two bodies (10, 14) in correspondence with said double-thick area of the first tubular body.

2 - A welding method according to claim 1, wherein said double-thick area (12)is obtained by locally flattening said first tubular body and wherein, during the welding operation, said area (12) is at least partially introduced into the original shape of the other tubular body (14).

3 - A welding method according to claim 2, wherein said local flattening of the first tubular body (10) is obtained by longitudinally "pinching" the same, on an arch approximately interesting 180° or less.

4 - An assembly of two or more tubular metal bodies, wherein said tubular bodies(10, 14) are welded to each other in a reciprocally angled position and according to the method as per one or more of the preceding claims.

5 - A metal piece of furniture, comprising one or mere structural components consisting in tubular bodies welded to each other in reciprocal angulation and according to the method of one more of claims 1 to 3.

6 - A metal furniture according to claim 5, wherein at least the welded tubular bodies are surface finished by plastification

Fig.1

Fig.2

Fig.3

Fig.4

Fig.5

Fig.6

1/1   0084649

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | FR-A-1 247 439 (FAURE)  - <br>*Abstract; page 3* | 1-5 | B 23 K  33/00 |
| Y | US-A-2 221 934 (FERRIS) <br>*Figures 1-17* | 2 | |
| A | GB-A- 842 267 (CRUSON) | | |
| A | US-A-1 368 490 (DIECKMANN) | | |

TECHNICAL FIELDS
SEARCHED (Int. Cl. 3)

B 23 K
B 21 D
A 47 B

The present search report has been drawn up for all claims

| Place of search <br> THE HAGUE | Date of completion of the search <br> 11-04-1983 | Examiner <br> HOORNAERT W. |
|---|---|---|